(19) Europäisches Patentamt
European Patent Office
Office européen des brevets

(11) **EP 2 642 735 A1**

(12) **EUROPEAN PATENT APPLICATION**

(43) Date of publication:
**25.09.2013 Bulletin 2013/39**

(51) Int Cl.:
**H04M 11/06** (2006.01)      **H04M 3/30** (2006.01)

(21) Application number: **12305331.6**

(22) Date of filing: **21.03.2012**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | (72) Inventors:<br>• **Drooghaag, Benoît**<br>  **1421 Ophain-Bois-Seigneur-Isaac (BE)**<br>• **Dupuis, Nicolas**<br>  **4051 Chaudfontaine (BE)** |
| (71) Applicant: **Alcatel Lucent**<br>**75007 Paris (FR)** | (74) Representative: **Lück, Stephan et al**<br>**Alcatel-Lucent Deutschland AG**<br>**Intellectual Property & Standards**<br>**Lorenzstraße 10**<br>**70435 Stuttgart (DE)** |

(54) **Method and device for detecting at least one bridged tap within a telecommunication line**

(57)     The invention refers to a method (83) and a device (17, 19, 39) for detecting at least one bridged tap (45, 63) within a telecommunication line (13), the method (83) comprising determining (87) measurement data (Hlog) that characterize a transfer function (59) of the telecommunication line (13) and detecting at least one local minimum (61, 69, 81) of the transfer function (59) caused by the bridged tap, said detecting depending on the measurement data (Hlog). In order to reliably detect the presence of at least one bridged tap in the telecommunication line (13) if there are multiple bridged taps (45, 63) without interrupting the normal operation of the telecommunication line (13), it is suggested that the method (83) include classifying (91) the at least one local minimum (61, 69, 83), said classifying (91) comprising determining whether the at least one minimum (61, 69, 83) belongs to a first class of minima (61, 69) caused by the bridged tap; and detecting the at least one bridged tap (45, 63) depending on an existence of the at least one local minimum (61, 69) belonging to the first class and/or on the location of said local minimum (61, 69) in the frequency domain.

Fig. 6

EP 2 642 735 A1

**Description**

**Field of the invention**

The present invention refers to a method for detecting at least one bridged tap within a telecommunication line. Furthermore, the invention refers to a device arranged for detecting the at least one bridged tap and a computer program product programmed for executing the method for detecting the at least one bridged tap within the telecommunication line.

**Background**

It is known to perform single ended line testing (SELT) in digital subscriber lines (DSL). SELT comprises reflectometry-based measurement procedures that allow for determining, at least in some cases, a location of a bridged tap in a subscriber line.

A bridged tap is a branch at the telecommunication line, with the first end of the bridged tap corresponding to a junction point within the telecommunication line. A second end of the bridged tap may be open or connected to a device not belonging to the digital subscriber line. For instance, a bridged tap may be the result of incorrect wiring e. g. in a remote cabinet. A bridged tap can also occur in in-house wiring. For example, a bridged tap can be created by connecting analogue or ISDN telephone equipment to a segment of the telecommunication line connected to a DSL modem without using a DSL splitter to properly separate the frequency bands used for DSL data transmission and telephony from each other.

When operating a telecommunication line having at least one bridged tap, unwanted reflections may occur at the first end and/or at the second end of the bridged tap in particular when the bridged tap is not correctly terminated at its second end. Because these reflections may disturb DSL data transmissions, it is required to detect and remove a bridged tap.

Because a bridged tap introduces additional reflections into the telecommunication line, the reflectometry-based SELT may be used in order to detect a bridged tap. However, in case of multiple bridged taps are present in the telecommunication line, it is possible that no bridged tap can be detected by means of SELT if the reflected signals introduced by different bridged taps eliminate each other by superposition. Furthermore, SELT requires a special test signal to be transmitted over the subscriber line and normal operation of the subscriber line must be interrupted during SELT. Therefore, SELT is not well-suited for repeated automatic tests of the subscriber line.

Furthermore, DSL systems typically have procedures for dual ended line testing (DELT) . DELT is carried out by two nodes connected to the different end points of the digital subscriber line, e.g. by an access node and a node that is part of the customer- premises equipment (CPE) . Results of the DELT can be retrieved from the nodes at the end points of the subscriber line by means of e.g. the simple network management protocol (SNMP) . By using DELT, measurement data related to a transfer function of the telecommunication line can be generated. It is known to detect a single bridged tap by analyzing the data related to the transfer function. However, the known approach for detecting a bridged tap based on the data related to the transfer function does not work reliably if there are multiple bridged taps in the telecommunication line.

**Summary**

The object of the present invention is to provide a method, a device and a computer program product that allow to reliably detect the presence of at least one bridged tap in a telecommunication line if there are multiple bridged taps without interrupting the normal operation of the telecommunication line. This object is solved by a method according to claim 1, a device according to claim 11, and a computer program product, preferably a storage medium, according to claim 14.

According to a preferred embodiment of the present invention, a method for detecting at least one bridged tap within a telecommunication line is provided, the method comprising determining measurement data that characterize a transfer function of the telecommunication line; detecting at least one local minimum of the transfer function, said detecting depending on the measurement data; classifying the at least one local minimum, said classifying comprising determining whether the at least one minimum belongs to a first class of minima caused by the bridged tap; and detecting the at least one bridged tap depending on an existence of the at least one local minimum belonging to the first class and/or on the location of said local minimum belonging to the first class in the frequency domain. In other words, the at least one bridged tap may be detected depending on the minima of the first class only. The minima that do not belong to the first class may not be considered when detecting the bridged tap.

Analysis of the transfer function of the telecommunication line having multiple bridged taps have shown that the transfer function has two classes of minima. The minima of first class of minima are directly caused by the bridged tap, in particular by reflections at an end of the bridged tap that does not correspond to a junction point within the telecommunication line. The minima of the first class may be subdivided into subclasses, with minima of each subclass belonging to a certain bridged tap. The minima of the second class are related to so-called inter-tap-segments of the telecommunication line, i.e. a segment between two neighboring junction points of different bridged taps. The minima of the second class may, at least in some cases, be caused by reflection at the junction points of the telecommunication line. By classifying the individual detected minima and considering only the minima belonging to the first class, i.e. the minima related to the bridged tap and not the inter-tap-segments, at least one bridged tap can be reliably detected even if multiple bridged taps are present in the telecommunication line. By determining the subclasses of the first class of minima, the number of the bridged taps may be determined and/or the length of at least one bridged tap may be estimated.

In an embodiment, the classifying comprises determining whether the at least one minimum belongs to the second class of minima caused by an inter-tap segment of the telecommunication line. As a consequence, the minima of the second class are not considered for detecting the bridged-tap. Although the invention is not limited to a certain number of different classes of minima, in a preferred embodiment, exactly two classes are used and each local minimum of the transfer function is either assigned to the first class or to the second class.

In an embodiment, the method comprises calculating a length of at least one bridged tap depending on the measurement data, preferably on the location of the at least one local minimum of the first class in the frequency domain.

In an embodiment, the classifying depends on the course of the transfer function in a region around the local minimum. In an exemplary embodiment, the local minima are classified by their shape, i.e. the shape of a transfer function curve around the local minimum to be classified. For instance, the minimum may be classified as a minimum of the first class if it has a sharp V-like shape. In an embodiment, the minimum is classified as a minimum of the second class if it has a round shape.

In another embodiment, the classifying comprises calculating a depth of each local minimum and determining whether the local minimum belongs to the first class depending on its depth, e.g. by comparing the depth with a predefined threshold. In yet another embodiment, the shape-based classification and the depth-based classification is combined.

Preferably, the classifying comprises determining that the local minimum belongs to the first class if the depth of the minimum is equal to the threshold or greater than the threshold and otherwise determining that the local minimum belongs to the second class.

In an embodiment, all local minima of the first class that are caused by the same bridged tap are identified. The local minima caused by the same bridged tap belong to the same subclass of the local minima of the first class. According to this embodiment, the method comprises identifying those local minima of the first class, a location of which in the frequency domain corresponds to odd multiples of a characteristic frequency related to a bridged tap of a certain length. The characteristic frequency may be the frequency (i.e. location in the frequency domain) of a minimum caused by the bridged tap, preferably of a minimum having the lowest frequency.

In order to easily find at least almost all bridged taps in the telecommunication line, in an embodiment the method comprises iteratively identifying bridged taps of a certain length, preferably beginning with the local minimum of the first class at the lowest frequency.

In an embodiment, a data structure such as a set or a list may be maintained in order to store the identified local minima of the first class. The data structure may be stored on a data memory (e.g. RAM of a controller or computer). In such an embodiment, the method comprises arranging all minima of the first class in the data structure and performing an iteration starting at the minimum in the data structure having the lowest frequency, wherein said iteration comprises determining all minima having odd multiples of the same characteristic frequency and removing the determined minima from the data structure.

Preferably, the iteration is repeated until the data structure is empty.

According to another preferred embodiment of the present invention, a device for detecting at least one bridged tap within a telecommunication line is provided, the device being arranged for determining measurement data that characterize a transfer function of the telecommunication line; detecting at least one local minimum of the transfer function; classifying the at least one local minimum, said classifying comprising determining whether the at least one minimum belongs to a first class of minima caused by the bridged tap; and detecting the at least one bridged tap depending on an existence of the at least one local minimum belonging to the first class and/or on the location of said local minimum in the frequency domain. This exemplary device has the advantages of the method described herein.

In an embodiment, the device is arranged, preferably programmed for executing a method according to the invention, embodiments of which are herein described.

In an embodiment, the device is a network element connected to the telecommunication line or a monitoring station arranged for communicating with the network element. The network element may be a network side termination node such as an access node, in particular a Digital Subscriber Line Access Multiplexer (DSLAM), or a terminal side termination node being part of a Customer Premise Equipment (CPE). The terminal side termination node may comprise a DSL modem. The monitoring station may include a computer such as a server, a personal computer, a handheld computer, a portable phone, etc. The monitoring station may be arranged for being connected to at least one of said network elements so that the monitoring station can retrieve the measurement data from the network element, e.g. by applying a communication protocol such as SNMP. At least one network element may use DELT in order to determine the measurement data. The network element may store the measurement data so that the monitoring station can retrieve them.

The device may comprise a controller or a computer that can be programmed for executing the method described herein. The controller or computer may comprise storage means in which a computer program is stored, which computer program is programmed for executing the method described herein on the controller or computer.

However said computer program cannot only be stored on the storage means of the controller or computer but also on any storage media (e.g. semiconductor storage, magnetic storage media, optical storage media such as optical discs, and the like) separate from the controller or computer. It may be provided for download e.g. over a computer network such as the Internet.

Thus, according to a further embodiment, a computer program product, preferably a storage medium, comprising a computer program is provided. The computer program may be programmed such that the controller or computer executes a method described herein when running said computer program.

## Brief description of the figures

Exemplary embodiments and further advantages of the present invention are shown in the Figures and described in detail hereinafter.

Figure 1    shows a telecommunication network according to a preferred embodiment of the present invention;
Figure 2    shows a telecommunication line of the network shown in Figure 1 having a single bridged tap;
Figure 3    shows a transfer function of the telecommunication line of Figure 2;
Figure 4    shows the telecommunication line having two bridged taps having a common junction point;
Figure 5    shows the transfer function of the telecommunication line shown in Figure 4;
Figure 6    shows a telecommunication line having two bridged taps with different junction points;
Figure 7    shows the transfer function of the telecommunication line shown in Figure 6; and
Figure 8    shows a flowchart of a method for detecting one or more bridged taps within the telecommunication line.

## Description of the embodiments

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

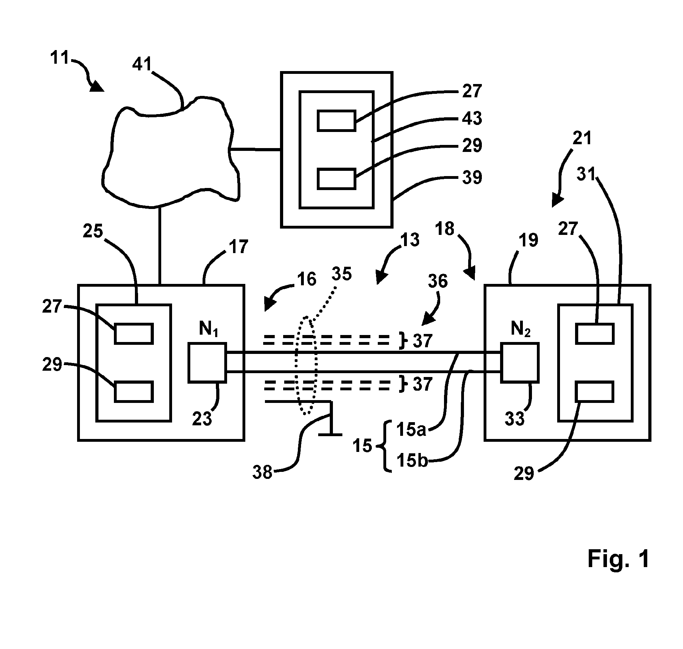

Figure 1 shows a communication network 11 comprising a telecommunication line 13. The telecommunication line 13 has a pair 15 of electrical conductors 15a, 15b with a first end 16 of the pair 15 being connected to a network side termination node of the network 11, further referred to as access node 17, and a second end 18 of the pair 15 being connected to a terminal side termination node 19 of the network 11. The terminal side termination node 19 may be part of customer premises equipment (CPE 21) of the network 11.

In the shown embodiment, the telecommunication line 13 is a Digital Subscriber Line (DSL), such as an ADSL, a VDSL or the like. Consequently, the access node 17 may be a DSL Access Multiplexer (DSLAM) or another type of DSL access node. The terminal side termination node 19 may be a DSL modem or include a DSL modem. However, the present invention is not limited to DSL. In another embodiment, the network 11 comprises a different type of telecommunication line 13.

The access node 17 has first modem circuitry 23 to which the first end 16 of the pair 15 is connected. In addition, the access node 17 has a first controller 25 adapted for controlling the operation of the access node 17. In an embodiment, the first controller 25 is a programmable computer comprising a processor 27, e. g. a microprocessor, and a storage element 29, e.g. semiconductor memory.

The terminal side termination node 19 includes second modem circuitry 33 to which the second end 18 of the pair 15 is connected. Furthermore, the terminal side termination node 19 comprises a second controller 31. The second controller 31 may have the same basic configuration as the first controller 25, i.e. the second controller 31 may be a programmable computer and comprise a processor 27 and/or a storage element 29.

In the shown embodiment, at least a part of the pair 15 is part of a binder 35 and extends in parallel to at least one further telecommunication line 36. Each further line 36 comprises a further conductor pair 37. The binder 35 may comprise an electrically conductive, preferably metallic, shielding 38 that may be grounded as depicted in Figure 1.

Furthermore, the network 11 may comprise an optional monitoring station 39 connected e. g. via a interconnection network 41 to at least one of the nodes 17, 19 such that the station 39 can communicate with at least one of the nodes 17, 19, preferably the access node 17. The station 39 comprises a third controller 43. The third controller 43 may have the same basic configuration as the first controller 25, i.e. the third controller 43 may be a programmable computer and comprise a processor 27 and/or a storage element 29. In an exemplary embodiment, the station 39 may be a server computer, a personal computer, a handheld computer such as a PDA or cell phone, etc. In an embodiment, the collection and processing of the measurement data may not done in the cell phone or laptop, but by a platform server. In this embodiment the phones are clients that can retrieve the results of the collection and processing from the server.

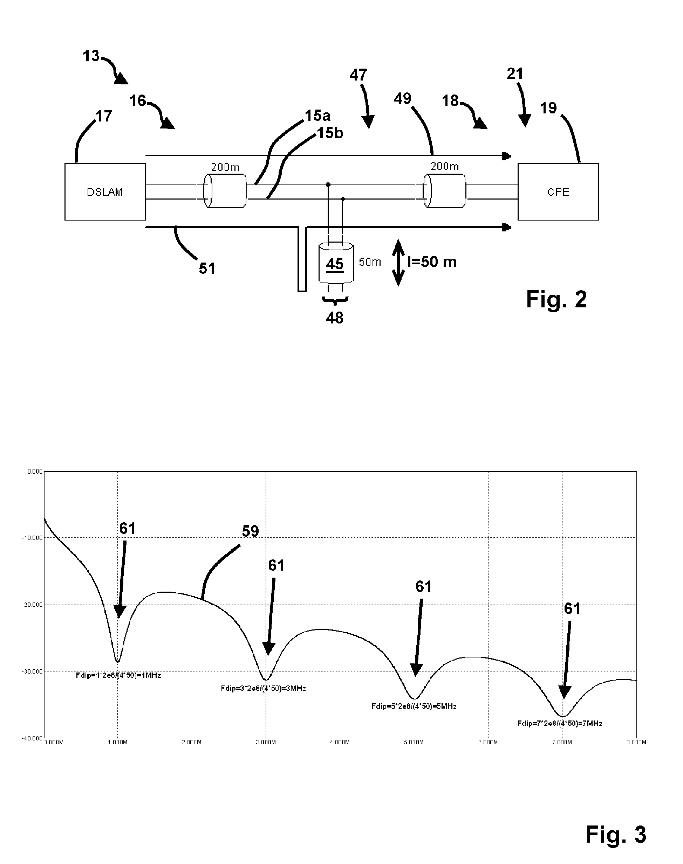

At least one of the controllers 25, 31 or 43 is arranged for executing a method for detecting at least one bridged tap within the telecommunication line 13, in particular within the pair 15 of conductors 15a, 15b. To this end, a computer program may be provided that is programmed such that at least one of the controllers 25, 31, 43 executes the method when running that computer program. In other words, the method may be executed on the access node 17, on the station 39, or the terminal side termination node 19. The computer program may be stored on at least one storage element 29. In addition, the computer program may be stored on any type of data storage media such as magnetic or optical disc or semiconductors charge media. Furthermore, the program may be provided by a server for transmission over a network, preferably the internet. Figure 2 shows the telecommunication line 13 having a first bridged tap 45. The first bridged tap 45 is a conductor pair that may be arranged in a cable. The first end of the first bridged tap 45 corresponds to a first junction point 47. At the first junction point 47, the first bridged tap 45 is connected to the conductor pair 15 of the telecommunication line 13. As shown in Figure 2, a second end of the bridged tap 45, further referred to as distant end 48 because it is not directly connected to the conductor pair 15, has been left open. However, in different examples, the distant end 47 of the first bridged tap may be connected to a device like a telecommunication device (e.g. analogue or ISDN telephone, telephone exchange switch, and the like).

When operating the line 13, a signal transmitted e.g. by the access node 17 propagates along a direct path 49 over the conductor pair 15 to the terminal side termination node 19. In addition, there is a first indirect signal path 51 from the access node 17 over the conductor pair 15, the junction point 47 to the first distant end 47 of the first bridged tap 45. At the first distant end 47, the signal is reflected over the bridged tap 45 back to the first junction point 47 and propagated over the conductor pair 15 to the terminal side termination node 19 of the CPE 21.

As can be seen in Figure 2, the overall length of the pair 15 of the telecommunication line 13 is 400 meters, with the junction point 47 being located in the middle between two 200 meter length segments of the pair 15 arranged one after another.

Figure 3 shows a diagram of a transfer function (curve 59) of the telecommunication line 13. The X-axis shows the frequency domain from zero (direct current) up to 8 MHz. The Y-axis shows the magnitude of the transfer function in a logarithmic scale. The transfer function 59 may be determined by measurements performed by the access node 17 and/or the terminal side termination node 19, in particular by the modem circuitry 23, 33. Measurement data Hlog that characterises the transfer function 59 may be stored on at least on one of the nodes 17 and 19. The measurement data Hlog may be retrieved from the nodes 17 and/ or 19 by means of a communication protocol such as SNMP. The measurement data Hlog may comprise multiple values of the magnitude of the transfer function 59, with each magnitude value corresponding to a different frequency. The measurement data Hlog may be generated using DELT.

The transfer function 59 has multiple regularly spaced local minima 61. These local minima 61 are caused by a superposition of the signal transmitted over the direct path 49 and the first indirect path 51 at the receiver of the signal, e.g. the terminal side termination node 19.

The frequency Fdip of the local minima (that is the location of the local minima 61 in the frequency domain) can be calculated by considering the additional signal propagation delay introduced by the first bridged tap 45 compared to the propagation delay along the direct path 49. This additional delay amounts to

$$delay = 2 \cdot TapLength / c \, ,$$

where c is the propagation velocity of the signal (typically c = $2 \cdot 10^8$ m/s).

According to transmission line theory, destructive interference (leading to the local minima 61 in the transfer function 59) appear for those frequencies where the delay between the two propagation paths 49, 51 is equal to an odd multiples of half the signal period

$$\frac{2 \cdot TabLength}{c} = \frac{k \cdot Tdips}{2} = \frac{k}{2 \cdot Fdips}, \text{ with } k = 1,3,5,\ldots$$

accordingly, the frequency of the local minima can be calculated as follows

$$Fdips = \frac{k \cdot c}{4 \cdot TapLength}$$

Using the above formula, the length $TapLength = l$ of the first bridged tap 45 can be calculated by determining the measurement data Hlog and detecting the local minima 61 of the transfer function 59 depending on the measurement data Hlog.

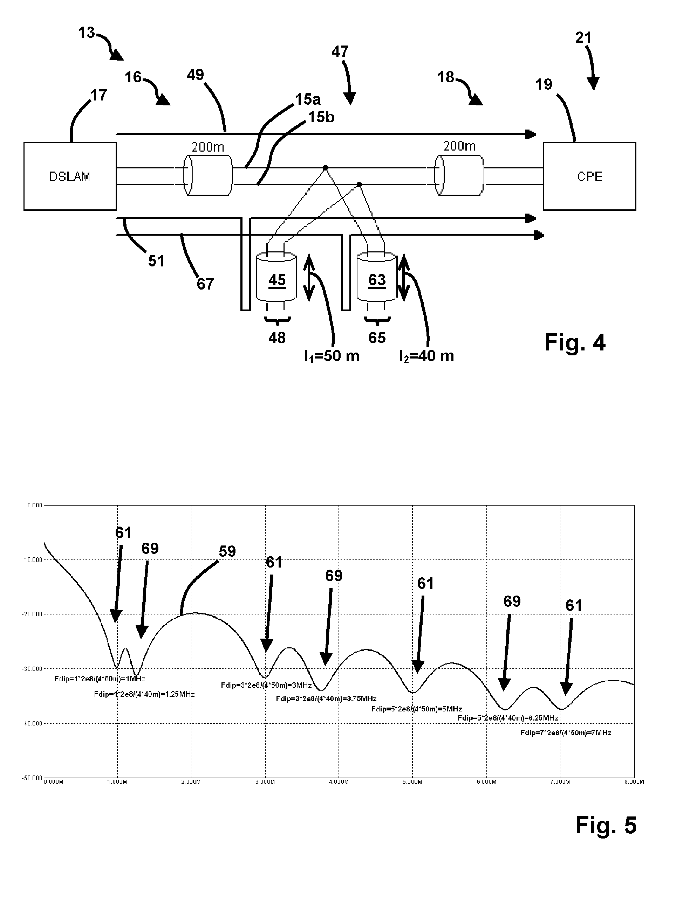

Figures 2 and 3 show a special scenario, where only one bridged tap 45 is present and all local minima 61 are caused by the single bridged tap 45. However, the above formula can also be used to identify multiple bridged taps that have a common junction point 47, as shown in Figure 4. In particular, the scenario shown in Figure 4 has in addition to the first bridged tap 45 a second bridged tap 63 having a second distant end 65. Both bridged taps 45, 63 are connected to the same junction point 47, i.e. the first end of both bridged taps 45, 61 corresponds to the first function point 47. The length $l_1$ of the first bridged tap 45 is 50 meters (as in the scenario shown in Figure 2). The length $l_2$ of the second bridged tap 63 is 40 meters. As shown in Figure 4, the second bridged tap 63 introduces a second indirect path 67. A signal propagating from the access node 17 to the terminal side termination node 19 along the second indirect path 67 goes from the access node 17 to the first junction point 47 and then to the second distant end 65. The second distant end 55 reflects the signal back via the second bridged tap 63 to the first junction point 47. Finally, the signal goes from this first junction point 47 to the terminal side termination node 19.

Figure 5 shows the transfer function 59 of the telecommunication line 13 having the two bridged taps 45, 63 shown in Figure 4. This transfer function 59 has the same local minima 61 caused by the first bridged tap 45 as the transfer function 59 shown in Figure 3. In addition, the transfer function 59 shown in Figure 5 has further local minima 69 that are caused by the second bridged tap 63. In an embodiment of the invention, the two bridged taps 45, 63 are detected by applying the above formula for the frequency $Fdip$ on the minima 61, 69. Applying this formula does not only allow to detect the bridged taps 47, 63 but also allows to determine the number and length $l_1, l_2$ of the bridged taps 45, 63.

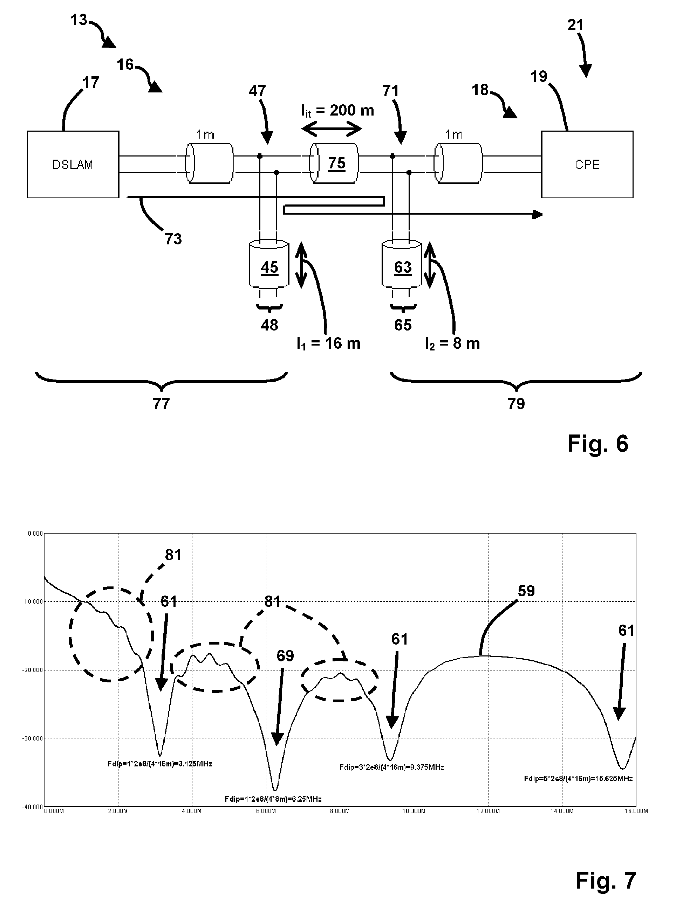

Figure 6 shows a scenario, where the telecommunication line 13 has two bridged taps 45, 63 with different junction points 47, 71. In particular, the first end of the first bridged tap 45 corresponds to the first junction point 47 and the first end of the second bridged tap 63 corresponds to a second junction point 71. A first section of the conductor pair 15, having a length of 1 meter, is arranged between the access node 17 and the first junction point 47. A second section of the pair 15, also referred to as inter-tap-segment 75, is located between the first junction point 47 and the second junction point 71. The length of the inter-tap-segment 75 is 1 meter. This second section of the conductor pair 15 has a length of 200 meters. Finally, a third section of the conductor pair 15 is arranged between the second junction point 71 and the terminal side termination node 19. The length of the first bridged tap 45 is $l_1 = 16$ meters. The length of the second bridged tap 63 is $l_2 = 8$ meters. This scenario can describe a situation according to which the first bridged tap 45 is located in a central office 77 and the second bridged tap 63 is part of an in-house wiring 79 of a customer.

When operating the line 13, a third indirect path 73 is introduced by the second segment between the junction points 47, 71 in addition to the first path 51 an the second path 67. For the sake of simplicity of the drawing, the first path 51 and the second path 67 are not shown in Figure 6. The third indirect signal path 73 starts at the access node 17 and goes to the second junction point 71, then it is reflected back to the first junction point 47. The first junction point 47 reflects the signal once again so that it is propagated over the conductor pair 15 to the terminal side termination node 19.

Figure 7 shows the transfer function 59 of the scenario shown in Figure 6. The transfer function 59 includes the first local minima 61 caused by the first bridged tap 45 and further local minima 69 caused by the second bridged tap 63. In addition the transfer function 59 has additional local minima that are caused by the inter-tap-segment 75 and therefore further referred to as inter-tap minima 81. The inter-tap minima 81 are caused by the third indirect path 73. A depth of the inter-tap minima 81 is smaller than a depth of the local minima 61, 69 caused by the bridged taps 45, 63. An additional delay compared to the direct path 49 of the third indirect path 73 is directly proportional to the distance between the two junction points 47, 71, i.e. a length $l_{it}$ of the inter-tap segment 75. A frequency $Fmin$ of the inter-tap minima 81 caused by the third indirect path 73 can be predicted by:

$$Fmin = \frac{k \cdot c}{4 \cdot InterTapDistance}$$

In an embodiment, the minima 61, 69 caused by propagation within a bridge-tap 45, 63 and the inter-tap minima 81 caused by propagation within reflection in the inter-tap segment 75 are distinguished from each other. The local minima 61, 69 caused by the bridged taps 45, 63 are deeper than the inter-tap minima 81. In addition, the minima 61, 69 caused by the bridged taps 45, 63 typically have a downward V-shape, whereas inter-tap minima 81 caused by the inter-tap segment 75 have a rather round shape, looking more or less like a sinusoidal oscillation. Thus, the class of a minimum 61, 69, 81 has an influence on both the depth of the minimum and its shape (i.e. course of the transfer function 59 around the minimum 61, 69, 81). The method described herein may classify the minima 61, 69, 81 depending on their depth and/or their shape.

The inter-tap minima 81 are not visible in the transfer function 59 in all situations. Sometimes at least one inter-tap minimum 81 may be hidden by local minimum 61, 69 caused by a bridged tap 45, 63. In addition, in particular if the length $l_{it}$ of the inter-tap-segment 75 is too low and/or an attenuation of the conductor pair 15 is too high, the inter-tap minima 81 might not be visible in the transfer function 59 above a certain frequency. For instance, the transfer function 59 shown in Figure 7 has no visible inter-tap minima 81 beyond a frequency of about 12MHz. However, although in some cases the inter-tap minima 81 are not always visible in the transfer function 59, in an embodiment of the invention, the minima 61, 69, 81 are classified into a first class of minima consisting of the minima 61, 69 caused by the bridged taps 45, 63 and the second class of minima consisting of the inter-tap minima 81. In an embodiment, only the minima 61, 69 of the first class are considered when detecting the bridged taps 47, 65 or estimating their length $1_1$, $1_2$.

The present invention is not limited to the exemplary scenarios described above in connection with Figures 2 to 7. The invention can be applied to any topology of the telecommunication line 13, made of several bridged taps 45, 63 connected at the same junction point 47 or connected to different junction points 47, 71. Each bridged tap 45, 63 leads to a series of regularly-spaced local minima 61, 69, while each inter-tap-segment 75 leads to a series of smaller oscillations having the inter-tap minima 81 with a comparatively small depth. Reflections due to bridged taps 45, 63 will always lead to a comparatively deep V-shaped local minima 61, 69 in the transfer function 59, whereas reflections due to an inter-tap-segment 75 will always lead to smaller oscillation having the inter-tap minima 81. If all bridged taps 45, 63 have a different length $1_1$, $1_2$ then it will be possible to identify all of them in the transfer function 59.

Furthermore, the number and/or the length $l_{it}$ of each inter-tap-segment 75 can be estimated based on the local minima of the second class, i.e. the inter-tap minima 81. If a bridged tap 45, 63 has been detected by analysing the transfer function 59 characterised by the measurement data Hlog then according to an embodiment single end line test (SELT) may be carried out in order to further analyse the telecommunication line, e.g. in order to estimate an absolute precision of the bridged taps 45, 63 within the telecommunication line 13.

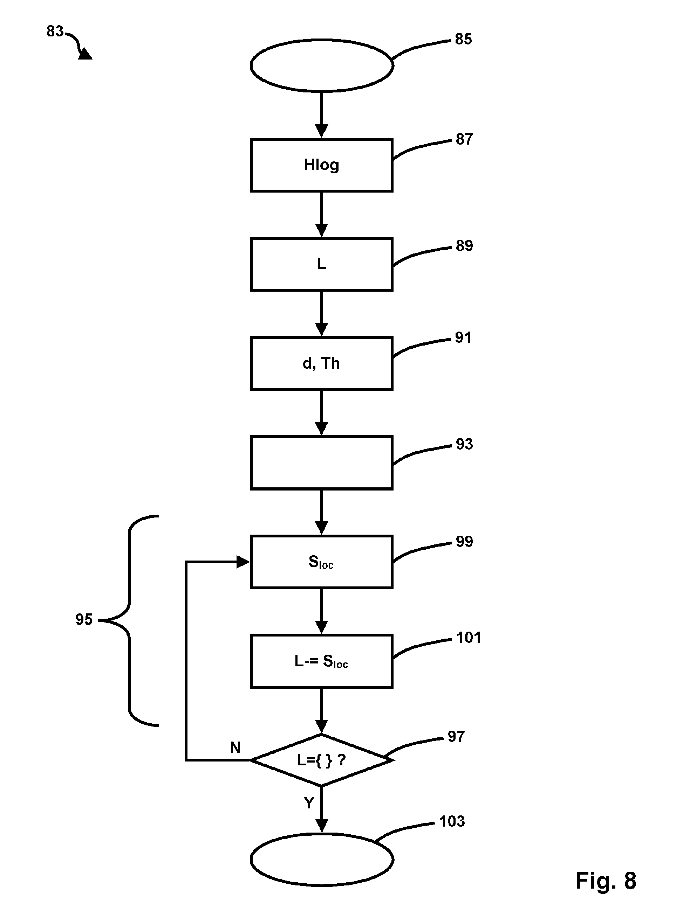

Figure 8 shows a flowchart of an exemplary method 81 for detecting at least 1 bridged tap 45, 63 in the telecommunication line 13. This method 83 may be executed on the monitoring station 39, on the access node 17, or on the terminal side termination node 19. In order to arrange these network elements 39, 17, 19 for executing the method 83, the respective controller 25, 31, 33 may be programmed such that it executes the method 83. In addition, the method 83 can be implemented in the form of a computer program that can be stored on any type of storage media, in particular in the storage element 29 in at least one of the controllers 25, 31, 43.

After a start 85 of the method 83, a step 87 is executed. Step 87 collects measurement data Hlog that characterise the transfer function 59 of the telecommunication line 13. The measurement data Hlog may be generated e.g. by measurement during a synchronisation procedure performed by the modem first modem circuitry 23 and the second modem circuitry 33 and retrieved during a DELT procedure by the access node 17 and/or the terminal side termination node 19 from the first modem circuitry 23 and/or the second modem circuitry 33. In particular, when executing the method 83 on network element different from the access node 17 or the terminal side termination node 19, the measurement data Hlog may be retrieved from the access node 17 and/or the terminal side termination node 19 by a communication protocol such as SNMP. It should be noted that the measurement data Hlog may be generated using a DELT procedure without interrupting the normal operation of the telecommunication line 13, i.e. without interrupting data transmissions over line 13.

After step 87, a step 89 is executed that detects the local minima 61, 69, 81 in the transfer function 59. To this end, step 89 may compute the first derivative of the transfer function 59 represented by the measurement data Hlog and looking for the frequencies where this first derivative is equal to zero, with a change in the sign. The result of step 89 is a list L of local minima 61, 69, 81.

After step 89 a further step 91 is executed for classification of the local minima 61, 69, 81. This classification 91 determines whether a certain minimum is caused by reflection on a bridged tap 45, 63 or by a reflection along an inter-tap-segment 75. In a preferred embodiment, classification is carried out by putting a threshold Th on a depth d on the local minimum 61, 69, 81. The depth can be computed as a difference of the magnitude of the transfer function 59 between the local minimum 61, 69, 81 and the closest local maximum. If the depth d is below the threshold Th then the local minimum is classified as an inter-tap minimum 81 (i.e. belonging to the second class of minima); otherwise the minimum is classified as "bridged tap minimum" (i.e. belonging to the first class of minima). In another embodiment, the classification is based on the shape of the local minima 61, 69, 81, in particular on the shape of the transfer function curve 59 in a region around the local minima 61, 69, 81. Step 91 may decide depending on the shape in the region around a local minimum 61, 69, 81 whether a local minimum 61, 69, 81 belongs to the first class of minima or to the second class of minima.

After step 91 has classified the local minima into the two classes a step 93 is executed that removes all local minima 81 belonging to the second class (inter-tap minima 81) from the list L of local minima.

Starting with the list L of local minima 61, 69 comprising only local minima 61, 69 of the first class, a loop is executed, the loop comprising an iteration 95 and a branch 97. A first step 99 of the iteration 95 considers the first local minimum 61, 69 of the list L of local minima using the frequency of this local minimum 61, 69, step 99 identifies a bridged tap 45, 63. Preferably, step 99 calculates and records the length $1_1, 1_2$ of the detected bridged tap 45, 63. In addition, step 99 identifies all local minima 61, 69 at the odd multiples of the frequency of the first minimum in the list L because these minima 61, 69 belong to the same bridged tap 45, 63. A set including these identified local minima 61, 69 belonging to a single bridged tap 45, 63 is denoted with $S_{loc}$. The local minima of the set $S_{loc}$ form a subclass of the first class of local minima.

A second step 101 of the iteration 95, which is executed after step 99, removes all local minima belonging to the detected bridged tap 45, 63 and identified in step 99 from the list L of local minima.

After step 101, the method 81 continues with the branch 97. Branch 97 checks whether the list L of local minima is empty. If so (Y) then the method 83 is terminated (step 103). Otherwise (N), the iteration 95 is repeated, i.e. the method 81 branches back to step 99. In other words, the iteration 95 comprising the steps 99 and 101 is repeated until the list L of local minima is empty.

To sum up, the method 83 for detecting at least one bridged tap 45, 63 described herein uses the classification step 91 in order to classify the local minima 61, 69, 81 into a first class of minima comprising the minima related to the bridged taps 45, 63 and a second class of local minima comprising the local minima 81 related to an inter-tap-segment 75. Only the minima 61, 69 of the first class are considered when detecting the at least one bridged tap 45, 63 and calculating its length $1_1, 1_2$. As a consequence, the method 83 described herein works particularly reliably even in cases where multiple bridged taps 45, 63 are present in the telecommunication line 13 and where the bridged taps 45, 63 have different junction points 47, 71 resulting in an inter-tap-segment 75 between these junction points 47, 71. Reliably detecting multiple bridged taps 45, 63 allows to generate a warning e.g. for technical personal that two or more bridged taps have to be removed in order to increase a maximum data transmission rate of the telecommunication line between the access node 17 and the terminal side termination node 19. After having received such a warning message, the personal knows that removing a single bridged tap is not enough to solve a problem related e.g. to a DSL line. Consequently, a technical problem related to DSL data transmission can be resolved in one step and multiple calls at a help desk of a network operator by customers complaining that the problem has not been solved even after field intervention (i.e. the removal of the first bridged tap) has taken place, can be avoided.

## Claims

1. Method (83) for detecting at least one bridged tap (45, 63) within a telecommunication line (13), the method (83) comprising

    - determining (87) measurement data (Hlog) that characterize a transfer function (59) of the telecommunication line (13);
    - detecting at least one local minimum (61, 69, 81) of the transfer function (59);
    - classifying (91) the at least one local minimum (61, 69, 83), said classifying (91) comprising determining whether the at least one local minimum (61, 69, 83) belongs to a first class of local minima (61, 69) caused by the bridged tap; and
    - detecting the at least one bridged tap (45, 63) depending on an existence of the at least one local minimum (61, 69) belonging to the first class and/or on the location of said local minimum (61, 69) in the frequency domain.

2. Method according to claim 1, wherein the classifying (91) comprises determining whether the at least one local minimum (61, 69, 83) belongs to a second class of local minima (83) caused by an inter-tap segment (75) of the telecommunication line (13).

3. Method (83) according to claim 1 or 2, wherein the method (83) comprises calculating a length ($l_1$, $l_2$) of at least one bridged tap (45, 63) depending on the measurement data (Hlog), preferably on the location (Fdip) of the local minimum (61, 69) of the first class in the frequency domain.

4. Method (83) according to one of the precedent claims, wherein the classifying (91) depends on the course of the transfer function (59) in a region around the local minimum (61, 69, 83).

5. Method (83) according to one of the precedent claims, wherein the classifying (91) comprises calculating a depth of each local minimum (61 69, 81) and determining whether the local minimum (61, 69, 81) belongs to the first class depending on its depth.

6. Method (83) according to claim 5, wherein the classifying (91) comprises determining that the local minimum (61, 69, 81) belongs to the first class if the depth of the local minimum (61, 69, 81) is equal to the threshold or greater than the threshold and otherwise determining that the local minimum (61, 69, 81) belongs to the second class.

7. Method (83) according to one of the precedent claims, wherein the method (83) comprises identifying those local minima (61, 69) of the first class, a location of which in the frequency domain corresponds to odd multiples of a characteristic frequency (Fdip) related to a bridged tap (45, 63) of a certain length ($1_1$, $1_2$).

8. Method (83) according to claim 7, wherein the method (83) comprises iteratively identifying bridged taps (45, 63) of a certain length ($1_1$, $1_2$), preferably beginning with the local minimum (61, 69) of the first class at the lowest frequency.

9. Method (83) according to claim 8, wherein the method (83) comprises arranging all local minima (61, 69) of the first class in a data structure (L) and performing an iteration (95) starting at the local minimum (61, 69) in the data structure (L) having the lowest frequency, wherein said iteration (95) comprises determining all local minima having odd multiples of the same characteristic frequency and removing the determined local minima (61, 69) from the data structure (L).

10. Method (83) according to claim 9, wherein the iteration (95) is repeated until the data structure (L) is empty.

11. Device (17, 19, 39) for detecting at least one bridged tap (45, 63) within a telecommunication line (13), the device (17, 19, 39) being arranged for

   - determining (87) measurement data (Hlog) that characterize a transfer function (59) of the telecommunication line (13);
   - detecting at least one local minimum (61, 69, 81) of the transfer function (59);
   - classifying (91) the at least one local minimum (61, 69, 83), said classifying (91) comprising determining whether the at least one local minimum (61, 69, 83) belongs to a first class of local minima (61, 69) caused by the bridged tap; and
   - detecting the at least one bridged tap (45, 63) depending on an existence of the at least one local minimum (61, 69) belonging to the first class and/or on the location of said local minimum (61, 69) in the frequency domain.

12. Device (17, 19, 39) according to claim 11, wherein the device (17, 19, 39) is arranged, preferably programmed, for executing a method (83) according to one of claims 1 to 10.

13. Device (17, 19, 39) according to claim 11 or 12, wherein the device is a network element (17, 19) connected to the telecommunication line (19) or a monitoring station (39) arranged for communicating with the network element (17, 19).

14. Computer program product, preferably a storage medium (29), comprising a computer program that is programmed such that a computer executes a method (83) according to one of claims 1 to 10.

Fig. 1

**Fig. 2**

**Fig. 3**

Fig. 4

$I_1=50$ m        $I_2=40$ m

Fig. 5

Fig. 6

Fig. 7

83

85

87
Hlog

89
L

91
d, Th

93

95

99
S$_{loc}$

101
L-= S$_{loc}$

N

97
L={ } ?

Y

103

Fig. 8

Europäisches Patentamt

European Patent Office

Office européen des brevets

# EUROPEAN SEARCH REPORT

Application Number

EP 12 30 5331

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2007/008835 A2 (ADAPTIVE SPECTRUM & SIGNAL [US]; CIOFFI JOHN M [US]; RHEE WONJONG [US]) 18 January 2007 (2007-01-18) * abstract; claims 1,3-7,21-27; figures 3A, 4-9,14; table 1 * * page 4, line 1 - line 21 * * page 16, line 17 - line 30 * * page 17, line 9 - line 13 * * page 18, line 5 - line 22 * * page 20, line 21 - line 28 * * page 21, line 7 - line 26 * ----- | 1-14 | INV. H04M11/06 H04M3/30 |
| X | US 2008/292064 A1 (WU XIDONG [US] ET AL) 27 November 2008 (2008-11-27) * abstract; figures 1,2,4-9 * * paragraph [0020] - paragraph [0024] * * paragraphs [0053], [0058], [0062] * ----- | 1-6,8-14 | |
| X | WO 00/63709 A1 (SUNRISE TELECOM INC [US]; CHONG RAY [US]) 26 October 2000 (2000-10-26) * abstract; claims 1-15; figures 1A-1C * * page 8, line 18 - line 31 * * page 9, line 20 - page 10, line 19 * * page 11, line 24 - line 33 * ----- | 1-14 | TECHNICAL FIELDS SEARCHED (IPC) H04M |
| X | WO 2004/099711 A1 (ERICSSON TELEFON AB L M [SE]; JENSEN AXEL FRANK [DK]; LINDQVIST FREDRI) 18 November 2004 (2004-11-18) * abstract; claims 1,2,9,10; figures 1-4 * * page 8, line 1 - page 9, line 29 * ----- | 1-14 | |

The present search report has been drawn up for all claims

| Place of search | Date of completion of the search | Examiner |
|---|---|---|
| Munich | 5 October 2012 | Ohanovici, Z |

EPO FORM 1503 03.82 (P04C01)

**ANNEX TO THE EUROPEAN SEARCH REPORT
ON EUROPEAN PATENT APPLICATION NO.**

EP 12 30 5331

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2012

| Patent document cited in search report | | Publication date | Patent family member(s) | | Publication date |
|---|---|---|---|---|---|
| WO 2007008835 | A2 | 18-01-2007 | AU | 2006268292 A1 | 18-01-2007 |
| | | | BR | PI0613066 A2 | 21-12-2010 |
| | | | CA | 2614936 A1 | 18-01-2007 |
| | | | CN | 101233721 A | 30-07-2008 |
| | | | CN | 101238645 A | 06-08-2008 |
| | | | EP | 1905195 A2 | 02-04-2008 |
| | | | JP | 4891995 B2 | 07-03-2012 |
| | | | JP | 2009500985 A | 08-01-2009 |
| | | | JP | 2011172238 A | 01-09-2011 |
| | | | US | 2008205501 A1 | 28-08-2008 |
| | | | US | 2011188640 A1 | 04-08-2011 |
| | | | WO | 2007008835 A2 | 18-01-2007 |
| US 2008292064 | A1 | 27-11-2008 | NONE | | |
| WO 0063709 | A1 | 26-10-2000 | AU | 4360400 A | 02-11-2000 |
| | | | EP | 1181567 A1 | 27-02-2002 |
| | | | TW | 459137 B | 11-10-2001 |
| | | | US | 6177801 B1 | 23-01-2001 |
| | | | US | 6417672 B1 | 09-07-2002 |
| | | | WO | 0063709 A1 | 26-10-2000 |
| WO 2004099711 | A1 | 18-11-2004 | AT | 381851 T | 15-01-2008 |
| | | | AT | 384395 T | 15-02-2008 |
| | | | AT | 553547 T | 15-04-2012 |
| | | | AU | 2004236618 A1 | 18-11-2004 |
| | | | AU | 2004237642 A1 | 18-11-2004 |
| | | | BR | PI0410263 A | 16-05-2006 |
| | | | BR | PI0410272 A | 16-05-2006 |
| | | | BR | PI0410286 A | 16-05-2006 |
| | | | CN | 1784586 A | 07-06-2006 |
| | | | CN | 1784881 A | 07-06-2006 |
| | | | CN | 1784882 A | 07-06-2006 |
| | | | DE | 602004010801 T2 | 11-12-2008 |
| | | | DE | 602004011333 T2 | 08-01-2009 |
| | | | DK | 1625736 T3 | 28-04-2008 |
| | | | EP | 1625348 A1 | 15-02-2006 |
| | | | EP | 1625735 A1 | 15-02-2006 |
| | | | EP | 1625736 A1 | 15-02-2006 |
| | | | ES | 2295851 T3 | 16-04-2008 |
| | | | JP | 4477626 B2 | 09-06-2010 |
| | | | JP | 2007529139 A | 18-10-2007 |
| | | | KR | 20060012602 A | 08-02-2006 |
| | | | KR | 20060016781 A | 22-02-2006 |
| | | | KR | 20060033716 A | 19-04-2006 |
| | | | MX | PA05011766 A | 26-01-2006 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.** EP 12 30 5331

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2012

| Patent document cited in search report | Publication date | Patent family member(s) | | Publication date |
|---|---|---|---|---|
| | | MX | PA05011767 A | 26-01-2006 |
| | | MX | PA05011800 A | 17-02-2006 |
| | | US | 2005027456 A1 | 03-02-2005 |
| | | US | 2007014393 A1 | 18-01-2007 |
| | | WO | 2004099711 A1 | 18-11-2004 |
| | | WO | 2004100512 A1 | 18-11-2004 |
| | | WO | 2004100513 A1 | 18-11-2004 |

EPO FORM P0459

For more details about this annex : see Official Journal of the European Patent Office, No. 12/82